# EUROPEAN PATENT SPECIFICATION

(11) **EP 1 497 203 B1**
(45) Date of publication and mention of the grant of the patent: **14.06.2006**
(21) Application number: 03727499.0
(22) Date of filing: 17.04.2003
(51) Int. Cl.: B65D 85/10, B65D 5/42

(54) **CONTAINER OF CIGARETTES**
VERPACKUNG FÜR ZIGARETTEN
PAQUET DE CIGARETTES

(30) Priority: 17.04.2002 IT BO20020203
(43) Date of publication of application: 19.01.2005
(73) Proprietor: G.D SOCIETÀ PER AZIONI, 40133 Bologna (IT)
(72) Inventor: PETRUCCI, Luca, I-41013 CASTELFRANCO EMILIA (IT); DRAGHETTI, Fiorenzo, I-40059 MEDICINA (IT)
(74) Representative: Jorio, Paolo
(86) International application number: PCT/EP2003/050111
(87) International publication number: WO 2003/086903

(56) References cited:
- EP-A- 0 346 025
- EP-A- 0 582 488
- DE-A- 4 440 555
- FR-A- 2 642 405
- US-A- 2 242 914
- US-A- 3 721 335
- US-A- 5 669 493
- US-B1- 6 244 017

## Description

### TECHNICAL FIELD

The present invention relates to a container of cigarettes.

More specifically, the present invention relates to a container of cigarettes comprising an outer package and a number of packets of cigarettes arranged in a given order inside said outer package.

### BACKGROUND ART

Known containers of cigarettes of the above type, normally referred to as "cartons", comprise a number of packets, each of which is used individually and therefore structured to withstand for a given length of time the stress to which a packet of cigarettes is subjected in use, and to preserve, for a relatively long time prior to use, the original characteristics of the cigarettes in the packet, regardless of external environmental conditions.

This is normally achieved by providing each packet of cigarettes with a package comprising an inner foil wrapping, a rigid or soft outer wrapping designed to withstand mechanical stress during use, and a transparent outer overwrapping for sealing the packet until it is opened.

Such a packet is obviously relatively expensive, particularly in view of the fact that the outer wrapping, which is normally the most expensive part of the packet after the cigarettes, cannot be reused.

US5301805 discloses a limited-life reusable hard pack for encasing a soft pack of cigarettes; the reusable hard pack permits easy access to the cigarettes by the feature of a slideable interior wall attached to a pivotable bottom wall which when moved relative to the exterior walls of the hard pack pushes the soft pack upward and beyond the top of the hard pack. An overhang on a top wall extends across and beyond one side wall to prevent the bottom wall from pivoting downward, beyond the bottom plane of the hard pack. The opposite side of the top wall leaves a gap through which cigarettes may be removed without opening the top closure; a tuck portion is pivotably attached to the top wall. When the pack is closed, the tuck portion lies inside and against the front wall of the pack. One such hard pack is collapsed and inserted into a standard ten-pack carton; in particular one of these reusable packs may be inserted into a standard ten-pack carton along with ten standard soft packs or foil packs, the consumer inserts a foil or soft pack into the reusable pack, then discards the inner foil or soft pack when finished, retaining the reusable pack for a fresh foil or soft pack and the consumer may then discard the reusable case after the last soft pack has been smoked.

US5669493 discloses a bundle pack, or carton, for cigarette packs that is made of thin cardboard and is provided with perforations and/or die-cut lines that allow separation of an end portion of the carton; the tabs that can be separated end portion of the carton having folded to form a smaller reusable box adapted to contain and protect at least one standard pack of cigarettes.

Both US5301805 and US5669493 disclose a carton for cigarette packs having an outer package housing a number of soft packets of cigarettes and a flat blank for making a rigid reusable box; the consumer has to make the rigid reusable box starting from the blank. However, the quality of the rigid reusable box is relatively not very good due to the fact that the rigid reusable box has to be made by the consumer using the flat blank; furthermore, the user could have some problems in making the rigid reusable box using the flat blank.

### DISCLOSURE OF INVENTION

It is an object of the present invention to at least partly eliminate the aforementioned drawbacks by enabling manufacturers to dispense with high-cost packaging while still providing the consumer with packets of the same appearance and mechanical strength, and which are equally easy to use.

According to the present invention, there is provided a container of cigarettes comprising an outer package, a number of packets of cigarettes arranged in a given order inside the outer package and at least one reusable box housed inside the outer package; the container being characterized by the fact that the reusable box is arranged side by side with the packets, is arranged with the packets in said given order, and contains one of the packet; each one of the other packets acting as a refill for the reusable box.

Since the necessary mechanical strength during use is provided entirely by the reusable box, into which each packet is inserted when used, the package of each packet can be greatly simplified and preferably limited to the airtight overwrapping alone.

### BRIEF DESCRIPTION OF THE DRAWINGS

A non-limiting embodiment of the present invention will be described by way of example with reference to the accompanying drawings, in which:
Figure 1 shows a view in perspective, with parts removed for clarity, of a preferred embodiment of the container according to the present invention;
Figure 2 shows a larger-scale view in perspective of a first detail in Figure 1;
Figure 3 shows a larger-scale view in perspective of a second detail in Figure 1;
Figure 4 shows a view in perspective of how the Figure 2 and 3 details are used.

### BEST MODE FOR CARRYING OUT THE INVENTION

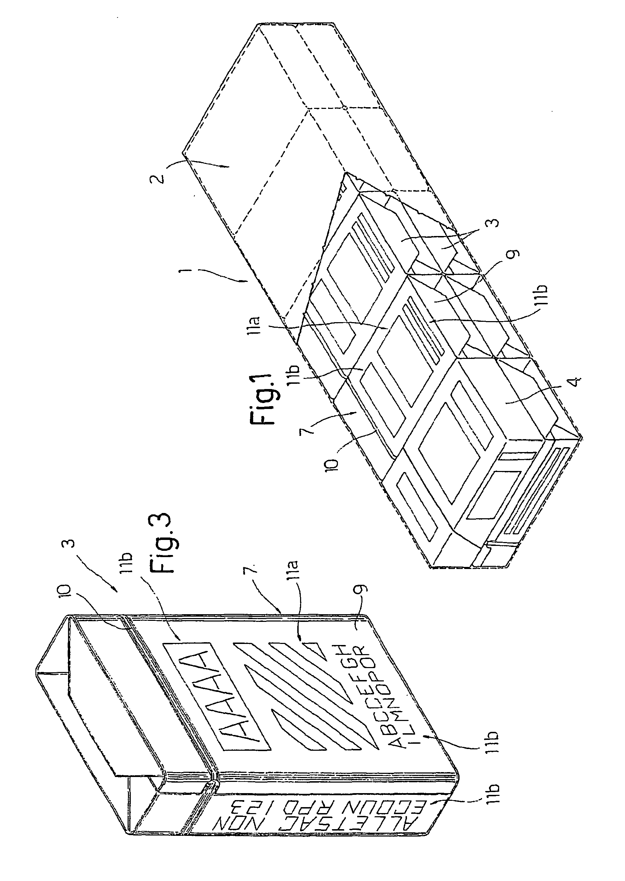

Number 1 in Figure 1 indicates as a whole a container of cigarettes, hereinafter referred to as a "carton", comprising an outer package 2, a number of packets 3 of cigarettes housed inside outer package 2, and at least one reusable box 4 housed inside outer package 2 side by side with packets 3 and arranged with packets 3 in a given order.

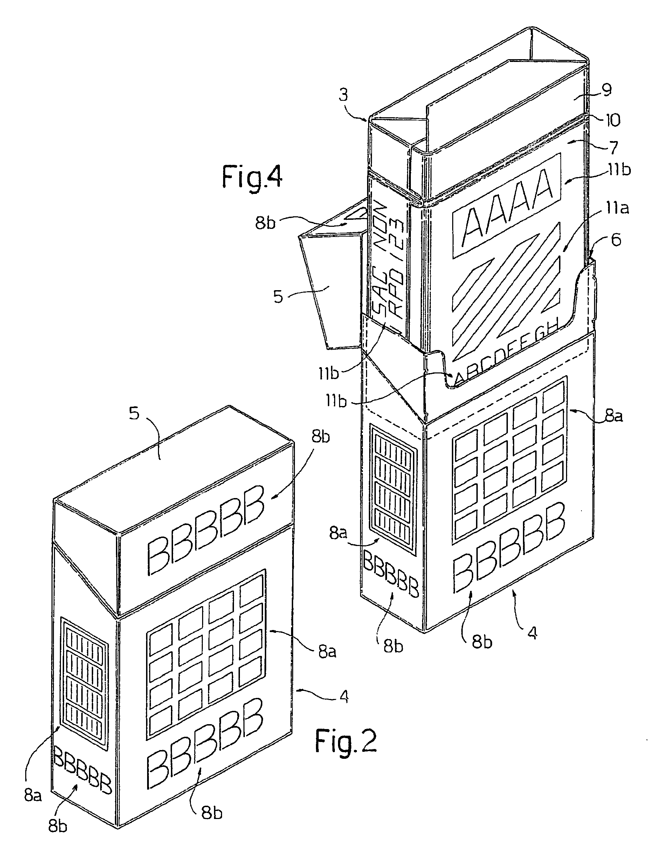

As shown more clearly in Figure 4, box 4 is a closed box comprising a lid 5, which can be opened for access to an opening 6 shaped and sized to allow the passage of a packet 3, and the inner shape of box 4 and the outer shape of each packet 3 are substantially complementary, so that a packet 3 can be inserted completely and closed inside box 4, and so that each packet 3 acts as a refill for box 4.

In the example shown in the accompanying drawings, carton 1 is a conventional carton in the form of an elongated rectangular parallelepiped, box 4 is a hinged-lid box in the form of a rectangular parallelepiped, and each packet 3 has an outer package 7 also in the form of a rectangular parallelepiped.

In connection with the above, it should be pointed out that a number of packets 3 and at least one box 4 - which originally contains a packet 3 and which in any case can be refilled with packets 3 - can be combined regardless of the shape of outer package 2, which may be any shape; of the type of package 2, which may be any type; of the order in which packets 3 and box 4 are arranged inside outer package 2, which may be any order compatible with the shape and size of outer package 2; of the shape of box 4 and packets 3; of the type of box 4, which, in the example shown, as stated, is a hinged-lid type; and of the type of packets 3.

For it to be reused, box 4 is preferably made of relatively strong material, such as cardboard, plastic, or sheet metal. Whichever the case, box 4 is made of printable material, so that its outer surface can act as a support for graphics, indicated as a whole by 8, comprising images 8a and/or messages 8b.

To make packets 3 as environment-friendly and cheap as possible, outer package 7 of each packet 3 is preferably defined solely by an airtight outer wrapping 9 opened by means of a tear-off strip 10.

Outer wrapping 9, which may be transparent or opaque, is also made of printable material, so that its outer surface can act as a support for graphics, indicated as a whole by 11, comprising images 11a and/or messages 11b and not necessarily the same as graphics 8.

If outer package 7 also comprises an inner wrapping on which graphics 11 are printed, outer wrapping 9 is made of transparent material so that graphics 11 are visible from the outside.

According to a further embodiment (not shown in the attached drawings), inside the carton 1 there is provided a sheet of paper or carton, which has the function of compensating the dimension of the box 4 in order to give uniform dimensions to the group of packets 3 inside the carton 1. The sheet of paper or carton may be printed and/or folded and can have the function of a coupon.

In actual use, once outer package 2 is opened, the user removes box 4 and, once the packet 3 contained originally in box 4 is opened and used up, refills box 4 with packets 3 one after the other until carton 1 is emptied.

## Claims

1. A container of cigarettes comprising an outer package (2), a number of packets (3) of cigarettes arranged in a given order inside the outer package (2) and at least one reusable box (4) housed inside the outer package (2); the container (1) being **characterized by** the fact that the reusable box (4) is arranged side by side with the packets (3), is arranged with the packets (3) in said given order, and contains one of the packet (3); each one of the other packets (3) acting as a refill for the reusable box (4).

2. A container as claimed in Claim 1, wherein each said packet (3) comprises an outer package (7) in turn comprising an airtight overwrapping (9).

3. A container as claimed in Claim 1 or 2, wherein each said packet (3) comprises an outer package (7) defined by an airtight overwrapping (9).

4. A container as claimed in Claim 2 or 3, wherein said overwrapping (9) and said reusable box (4) are made of respective printable materials.

5. A container as claimed in one of Claims 1 to 4, wherein said reusable box (4) and each of said packets (3) are printed with first and, respectively, second graphics (8, 11) visible from the outside.

6. A container as claimed in Claim 5, wherein said first graphics (8) are different from said second graphics (11).

7. A container as claimed in any one of Claims 1 to 6, wherein said reusable box (4) is a closed box comprising a lid (5) which can be opened and which closes an opening (6) shaped and sized to permit the passage of a said packet (3).

8. A container as claimed in Claim 7, wherein the inner shape of said reusable box (4) and the outer shape of each said packet (3) are substantially complementary.

9. A container as claimed in any one of Claims 1 to 8, wherein said reusable box (4) is made of cardboard.

10. A container as claimed in any one of Claims 1 to 8, wherein said reusable box (4) is made of plastic material.

11. A container as claimed in any one of Claims 1 to 8, wherein said reusable box (4) is made of metal material.

12. A container as claimed in any one of Claims 1 to 11, wherein inside the container (1) there is provided a sheet of paper or carton, which has the function of compensating the dimension of the box (4) in order to give uniform dimensions to the group of packets (3) inside the container (1).

13. A container as claimed in Claim 12, wherein the sheet of paper or carton is printed and have the function of a coupon.

14. A container as claimed in Claim 12 or 13, wherein the sheet of paper or carton is folded.

## Patentansprüche

1. Behälter für Zigaretten, mit einer äußeren Verpackung (2), einer Anzahl Päckchen (3) für Zigaretten, die in der äußeren Verpackung (2) in einer bestimmten Anordnung arrangiert sind, und mit mindestens einer wiederverwendbaren Schachtel (4), die in der äußeren Verpackung (2) untergebracht ist, wobei der Behälter (1) **dadurch gekennzeichnet ist, dass** die wiederverwendbare Schachtel (4) in Reihe mit/neben den Päckchen (3) angeordnet ist, in der vorgegebenen Anordnung arrangiert ist, und eines der Päckchen (3) enthält, wobei jedes der anderen Päckchen (3) jeweils zum Nachfüllen der wiederverwendbaren Schachtel (4) dient.

2. Behälter nach Anspruch 1, wobei jedes Päckchen (3) eine äußere Verpackung (7) aufweist, die selbst eine luftdichte Hülle (9) aufweist.

3. Behälter nach Anspruch 1 oder 2, wobei jedes Päckchen (3) eine äußere Verpackung (7) aufweist, die durch eine luftdichte Hülle (9) bestimmt ist.

4. Behälter nach Anspruch 2 oder 3, wobei die Hülle (9) und die wiederverwendbare Schachtel (4) jeweils aus bedruckbaren Materialien hergestellt sind.

5. Behälter nach einem der Ansprüche 1 bis 4, wobei die wiederverwendbare Schachtel (4) und jedes Päckchen (3) mit ersten und zweiten Darstellungen (8, 11) bedruckt sind, die von außen sichtbar sind.

6. Behälter nach Anspruch 5, wobei die ersten Darstellungen (8) von den zweiten Darstellungen (11) verschieden sind.

7. Behälter nach einem der Ansprüche 1 bis 6, wobei die wiederverwendbare Schachtel (4) eine verschlossene Schachtel ist, die einen Deckel (5) aufweist, der geöffnet werden kann und der eine Öffnung (6) verschließt, die derartig geformt und gestaltet ist, dass ein Päckchen (3) hindurchpasst.

8. Behälter nach Anspruch 7, wobei die innere Gestalt der wiederverwendbaren Schachtel (4) und die äußere Gestalt des Päckchens (3) im wesentlichen aneinander angepasst sind.

9. Behälter nach einem der Ansprüche 1 bis 8, wobei die wiederverwendbare Schachtel (4) aus Kartonmaterial hergestellt ist.

10. Behälter nach einem der Ansprüche 1 bis 8, wobei die wiederverwendbare Schachtel 4 aus Kunststoffmaterial hergestellt ist.

11. Behälter nach einem der Ansprüche 1 bis 8, wobei die wiederverwendbare Schachtel (4) aus Metall hergestellt ist.

12. Behälter nach einem der Ansprüche 1 bis 11, wobei im Inneren des Behälters (1) ein Blatt aus Papier oder Kartonmaterial vorgesehen ist, das zum Ausgleich der Abmessung der Schachtel (4) vorgesehen ist, um der Gruppe von Päckchen (3) im Inneren des Behälters (1) gleichmäßige Abmessungen zu vermitteln.

13. Behälter nach Anspruch 12, wobei das Blatt aus Papier oder Kartonmaterial bedruckt ist und die Funktion eines Kupons besitzt.

14. Behälter nach Anspruch 12 oder 13, wobei das Blatt aus Papier oder Kartonmaterial gefaltet ist.

## Revendications

1. Conteneur de cigarettes comprenant un emballage extérieur (2), plusieurs paquets de cigarettes (3) disposés dans un ordre donné à l'intérieur de l'emballage extérieur (2) et au moins une boîte réutilisable (4) logée à l'intérieur de l'emballage extérieur (2); le conteneur (1) étant **caractérisé par le fait que** la boîte réutilisable (4) et les paquets (3) sont disposés côte à côte, que la boîte est disposée avec les paquets (3) dans ledit ordre donné, et contient un des paquets (3), chacun des autres paquets (3) se comportant comme une recharge pour la boîte réutilisable (4).

2. Conteneur tel que revendiqué dans la revendication 1, dans lequel chacun desdits paquets (3) comprend un emballage extérieur (7) comprenant à son tour un surenveloppement hermétique (9).

3. Conteneur tel que revendiqué dans la revendication 1 ou 2, dans lequel chacun desdits paquets (3) comprend un emballage extérieur (7) défini par un surenveloppement hermétique (9).

4. Conteneur tel que revendiqué dans la revendication 2 ou 3, dans lequel ledit surenveloppement (9) et ladite boîte réutilisable (4) sont réalisés en matériaux imprimables respectifs.

5. Conteneur tel que revendiqué dans l'une des revendications 1 à 4, dans lequel ladite boîte réutilisable (4) et chacun desdits paquets (3) sont imprimés avec des premier et respectivement second graphismes (8, 11) visibles de l'extérieur.

6. Conteneur tel que revendiqué dans la revendication 5, dans lequel lesdits premiers graphismes (8) sont différents desdits seconds graphismes (11).

7. Conteneur tel que revendiqué dans l'une quelconque des revendications 1 à 6, dans lequel ladite boîte réutilisable (4) est une boîte fermée comportant un couvercle (5) qui peut être ouvert et qui ferme une ouverture (6) formée et dimensionnée de façon à permettre le passage d'un dit paquet (3).

8. Conteneur tel que revendiqué dans la revendication 7, dans lequel la forme intérieure de ladite boîte réutilisable (4) et la forme extérieure de chaque paquet (3) sont sensiblement complémentaires.

9. Conteneur tel que revendiqué dans l'une quelconque des revendications 1 à 8, dans lequel la boîte réutilisable (4) est réalisée en carton.

10. Conteneur tel que revendiqué dans l'une quelconque des revendications 1 à 8, dans lequel la boîte réutilisable (4) est réalisée en matière plastique.

11. Conteneur tel que revendiqué dans l'une quelconque des revendications 1 à 8, dans lequel la boîte réutilisable (4) est réalisée en un matériau métallique.

12. Conteneur tel que revendiqué dans l'une quelconque des revendications 1 à 11, dans lequel, à l'intérieur du conteneur (1), se trouve une feuille de papier ou de carton, qui a pour fonction de compenser la dimension de la boîte (4) pour donner des dimensions uniformes au groupe de paquets (3) à l'intérieur du conteneur (1).

13. Conteneur tel que revendiqué dans la revendication 12, dans lequel la feuille de papier ou de carton est imprimée et a une fonction de bon.

14. Conteneur tel que revendiqué dans la revendication 12 à 13, dans lequel la feuille de papier ou de carton est pliée.
